# EUROPEAN PATENT APPLICATION

(11) **EP 3 487 206 A1**
(43) Date of publication of application: **22.05.2019**
(21) Application number: 17201883.0
(22) Date of filing: 15.11.2017
(51) Int. Cl.: H04W 24/10, H04W 88/06

(54) **MEASUREMENT GAP CONFIGURATION FOR 5G**

(71) Applicant: FUJITSU LIMITED, Kanagawa 211-8588 (JP)
(72) Inventor: WEI, Xusheng, Staines, Surrey TW18 2QT (GB); BUCKNELL, Paul, East Sussex BN10 7AJ (GB)
(74) Representative: Haseltine Lake LLP

(57) **Abstract**

Measurement gaps are provided in wireless communication for allowing a terminal (10) to perform measurements. In LTE there are only two measurement gap configurations and these two configurations also have the same measurement gap length. The terminal will only have one measurement gap configuration which is linked to all measurement objects, which is inadequate for New Radio, NR. Therefore, methods are proposed by which a gNB (20) may provide the terminal with multiple measurement gap configurations, each configuration including at least a measurement gap length. Each measurement gap configuration may be linked to a measurement object (with possibly multiple measurement gap configurations defined for one and the same measurement object). The provided measurement gap configurations may replace a measurement configuration information element employed in an LTE wireless communication system (in which case there is no default configuration); alternatively the terminal has a default measurement gap configuration, each measurement object optionally having its own measurement gap configuration which replaces the default configuration. The terminal (10) may be provided with a measurement gap configuration list which indicates the plurality of measurement gap configurations, and a measurement identity list including measurement identities with mappings between the two. In this way, a more flexible measurement configuration may be provided suitable for NR.

## Description

### Field of the Invention

The present invention relates to a wireless communication method in which terminals connect to cells in a wireless network. The present invention further relates to a wireless communication system, a terminal and a base station.

Particularly, but not exclusively, the present invention relates to techniques for designing a measurement gap configuration in a "5G" (also known as "NR" for New Radio) wireless communication system.

### Background of the Invention

Wireless communication systems are widely known in which terminals (also called user equipments or UEs, subscriber or mobile stations) communicate with base stations (BSs) within communication range of the terminals.

At a given carrier frequency the different geographical areas served by one or more base stations are generally referred to as cells. A base station may control one or more transmission (and/or reception) points and each transmission point may support one or more cells. Typically many transmission points are provided in appropriate locations so as to form a network covering a wide geographical area more or less seamlessly with adjacent and/or overlapping cells. (In this specification, the terms "system" and "network" are used synonymously). For each cell, a base station, which provides or at least manages the transmission point, divides the available bandwidth, i.e. frequency and time resources, into individual resource allocations for the user equipments served by the cell. In this way, a signal transmitted in a cell and scheduled by the base station has a specific location in the frequency and time domains. The terminals are generally mobile and therefore may move among the cells, prompting a need for handover of the connection of the terminal to the network as the terminal moves between adjacent cells. A terminal may be in range of (i.e. able to detect signals from and/or communicate with) several cells at the same time, but in the simplest case it communicates with one "serving" cell.

In current, "4G" systems, also known as LTE or LTE-A, a terminal has to perform cell search and synchronization in order to connect to a cell. For this purpose, each cell broadcasts synchronization signals referred to as the Primary Synchronization Signal (PSS) and Secondary Synchronization Signal (SSS). These signals establish a timing reference for the cell, and carry a physical layer cell identity and physical layer cell identity group for identifying the cell. These kinds of signals are referred to below as "synchronization signals".

In an LTE system, in the frequency domain, transmissions occur within at least one frequency band, and the range of frequencies used to provide a given cell is generally a subset of those within a given frequency band. Adjacent cells generally employ different carrier frequencies within the frequency band, necessitating retuning of an RF circuit of the terminal if the terminal moves between cells.

In the time domain, transmission is organized in "frames" which are subdivided into "subframes". In one frame structure used in LTE, a 10 ms frame is divided into 10 subframes each of 1ms duration. PSS/SSS can indicate to a terminal the timings of frame boundaries, i.e. timings where frames stop and start. In LTE, each of the PSS and SSS is transmitted twice per frame, in other words with a 5ms periodicity (and consequently, only in some subframes). For example, PSS and SSS are both transmitted on the first and sixth subframe of every frame within the frame structure.

In LTE specifications, a terminal can be considered as either synchronised or unsynchronised with respect to a cell. Successfully decoding the PSS and SSS allows a terminal to obtain synchronization information, including downlink (DL) timing and cell ID for a cell; in other words the terminal (or at least some aspects of the operation of the terminal) can become "synchronized" with the timing of signals associated with the cell. In the synchronized state, the terminal can decode system information contained in a Physical Broadcast Channel (PBCH) broadcast by the cell. The terminal can then begin to receive user data (packets) on a downlink from the cell, and/or, typically after some further protocol steps, transmit user data on an uplink (UL) to the cell.

Terminals need to measure each communication channel between itself and a given cell in order to provide appropriate feedback to that cell. To facilitate measurements of the channel by terminals, reference signals are transmitted by the cells. Various kinds of reference signal (or symbol) are provided in LTE, including cell-specific reference signals (CRS) and channel state information reference signals (CSI-RS), both of which may be used by the UE to estimate the channel and report channel quality information (CQI) to the base station. Unlike CRS, CSI-RS may not be transmitted regularly in the time/frequency domain. The term "reference signals" is used below to include both CRS and CSI-RS.

Nowadays mobile access to the Internet or other communications networks is becoming a crucial necessity for both business and personal life and there are significant challenges to the current wireless systems due to the popularity of new applications such as social networking, cloud based services and big data analysis. With the forthcoming services such as Internet of things and ultra-reliable, mission-critical connections, a next-generation radio access system to succeed LTE/LTE-A and known as "5G" or "NR" (New Radio) will be needed to satisfy all those demanding requirements. Studies regarding 5G/NR are proceeding within various groups within 3GPP, the 3rd Generation Partnership Project previously responsible for devising the UMTS and LTE standards.

Simultaneous requirements to be met comprise greatly increased traffic loads; many more devices; reduced latency; low-power and low-cost solutions for Machine-to-Machine (M2M) devices; and increased peak and guaranteed data rates. The intention of 5G is to satisfy all requirements of these applications and ideally, 5G could provide at least the following features:
- Ultra-reliable connection in addition to higher data rate, higher capacity and higher spectral efficiency
- Unified user experience together with significant reduction on latency
- Scalability/adaptability to applications with significant different Quality of Service (QoS) requirements
- Access all spectrum and bands and support different spectrum sharing schemes

From the properties of traffic profiles point of view, it is expected that 5G will support three profiles with significant different properties, namely:
(i) high data throughput with highly mobile devices;
(ii) low-energy consumption and long lived sensor-based services; and
(iii) extremely low latency and high reliability services.

From the industry point of view, 5G will not only provide traditional voice and data services but also expand and penetrate to other industries such as automotive, agriculture, city management, healthcare, energy, public transportation etc., and all these will lead to a large ecosystem which has never been experienced before.

The technical challenges for designing such a sophisticated and complicated system are tremendous and significant breakthroughs will be required both on the network side and in the radio interface. Regarding the physical layer of the radio interface, a few new techniques will be introduced in order to support aforementioned 5G requirements. One important objective of studies in 3GPP (see for example RP-160671, New SID Proposal: Study on New Radio Access Technology, NTT DOCOMO) is to investigate fundamental physical layer designs such as waveform design, basic numerology (see below) and frame structure, channel coding scheme(s) and so on to meet key 5G requirements.

As part of the physical layer design, the traditional concept of a base station which both schedules resources and houses the physical antennas for wireless communication with terminals, becomes more fluid. Terminology used with respect to 5G/NR includes "gNB" (Next generation Node B), which manages (either locally or remotely) at least one transmission point. Such a transmission point may also serve as a reception point, and is typically referred to as a TRP (Transmission/Reception Point).

At least in the longer term, it is expected that much more spectrum will be available to 5G systems in order to meet traffic demand. To date, spectrum for mobile communication has focused on frequencies below 6GHz and typically 2GHz or below. In the time frame of 2020 to 2030, more spectrum at higher frequencies such as around 6 GHz, 10 GHz or even up to 100 GHz will be considered. At the same time wider frequency spans will be available at these extreme higher frequency bands. More detailed information is provided in Table 1 (source: Ofcom, "Spectrum above 6 GHz for future mobile communications", February 2015).

**Table 1 Possible spectrum allocation for 5G and beyond**

| **Spectrum** | **Possible allocation** |
|---|---|
| **5GHz** | This band is being considered at the ITU World Radio Conference in 2015 (WRC-15) - in total over 300MHz in new spectrum could be allocated |
| | If agreed at WRC-15, a contiguous band from 5150 to 5925MHz would be created using a combination of existing and new spectrum |
| | Channel sizes likely based on current Wi-Fi use, in multiples of 20MHz, and the band may remain as a licence-exempt band in line with current Wi-Fi |
| **15GHz** | Potentially over 500MHz contiguous spectrum depending on the sub-band used and sharing with existing uses |
| | Very high speeds are achievable - for example, peak speeds of 5Gbps have been demonstrated already |
| | Channel sizes could be very wide, for example, multiples of 100MHz |
| **28GHz** | Similar to the 15GHz band, for example, over contiguous 500MHz of spectrum depending on the sub-band used and sharing with existing uses |
| | Channel sizes could be very wide, for example, multiples of 100MHz |
| | Depending on the bandwidth available, the band could accommodate multiple operators with the opportunity for companies other than established mobile operators to offer some 5G services with an assignment of 100MHz per operator, or more, depending on national availability and sharing with existing services. |
| **60-80GHz** | Potentially up to 5GHz of contiguous spectrum depending on the selected sub-band (for example, 71-76MHz and/or 81-86GHz) |
| | Channel sizes could be very wide, for example, multiples of 100MHz |
| | Depending on the bandwidth available, the band could accommodate multiple operators with the opportunity for companies other than established mobile operators to offer some 5G services with a 100MHz assignment per operator, or more, depending on national availability and sharing with existing services. |

The radio propagation characteristics at the extreme high frequencies such as spectrum above 6 GHz, brings more challenges compared with that of spectrum at 2 GHz, which is the typical spectrum of 3G/4G. These challenges are the large path loss, poor penetration/scattering properties and possible non-existing line of light path. Despite these challenges, extreme high frequencies also have their advantages such as large bandwidth availability. Carrier spacings may be adapted to suit the bandwidth(s) available.

The possibility of using various frequency bands or frequency layers leads to the concept of "numerology". This is a special term used for NR to describe a set of parameters for OFDM. For example numerology 1 has a 15 KHz carrier spacing, a particular OFDM symbol period and a particular cyclic prefix length. "numerology 2" may have a 30 kHz carrier spacing, a particular OFDM symbol length (which is half of that of the numerology with 15 kHz), and also a particular different cyclic prefix length.

Thus, a UE may need to communicate via different frequency layers, which differ in the sense that each layer has a different central frequency, or that they are not overlapping in the frequency domain. The frequency layers may be different bands, or different frequency parts within one band. Generally, different cells will be defined in each of the frequency layers. It is assumed that a UE has one RF circuit, or that in the case of multiple RF circuits, all are in use so the UE does not have a "free" RF circuit. Under these scenarios a "measurement gap" will be required when the UE needs to retune to a different frequency layer, as explained later.

An advantage of high frequencies is that the size of antennas can be small, which means that a dense antenna array is more feasible to be used for extreme high frequency scenarios. With a dense antenna array, it is easy for a mobile network to exploit the benefits of beam-forming techniques. Digital beamforming and analog beamforming are two typical types of beamforming. Theoretically, the difference between them is that, at a particular time instance, analog beamforming builds a single beam using many of antennas, to cover a limited area with smaller power consumption and hardware usage; whereas digital beamforming can have multiple beams simultaneously to cover a relatively wide area with more power consumption and more hardware cost. Sometimes the network can use these two beamforming techniques together.

In discussions in 3GPP on NR it was already agreed that both single beam operation and multiple beam operation should be supported by the initial access procedure. In the following, terminology and principles of operation relevant for LTE (4G) are also assumed to generally applicable for NR (5G). The NR design is assumed to be based on LTE, but with additional features and enhancements.

A typical NR cell, provided by a gNB, may consist of one or a few TRPs (Transmission Reception Points) and each TRP may generate a few beams to provide coverage within a cell. Here we consider a cell to be a geographical area where a cell ID can be determined by a terminal from transmissions by the network. In a similar way to camping on a cell in 2G/3G/4G in NR, a UE may camp on a particular beam to access the network. One UE would connect with the TRP via one beam in general.

To deal with this new scenario in 3GPP discussions on NR, the concept of "SS block" is introduced into the NR synchronization design, where "SS" stands for synchronization signal. A SS block can consist of PSS, SSS and PBCH (or any combination thereof) and these signals can multiplexed by either TDM or FDM within a SS block. A given SS block is transmitted using a corresponding beam. Multiple SS blocks may compose one SS burst. The simplest scenario is where there is one beam per SS block and all the beams use the same frequency but differ in the spatial domain (transmitted toward different directions).

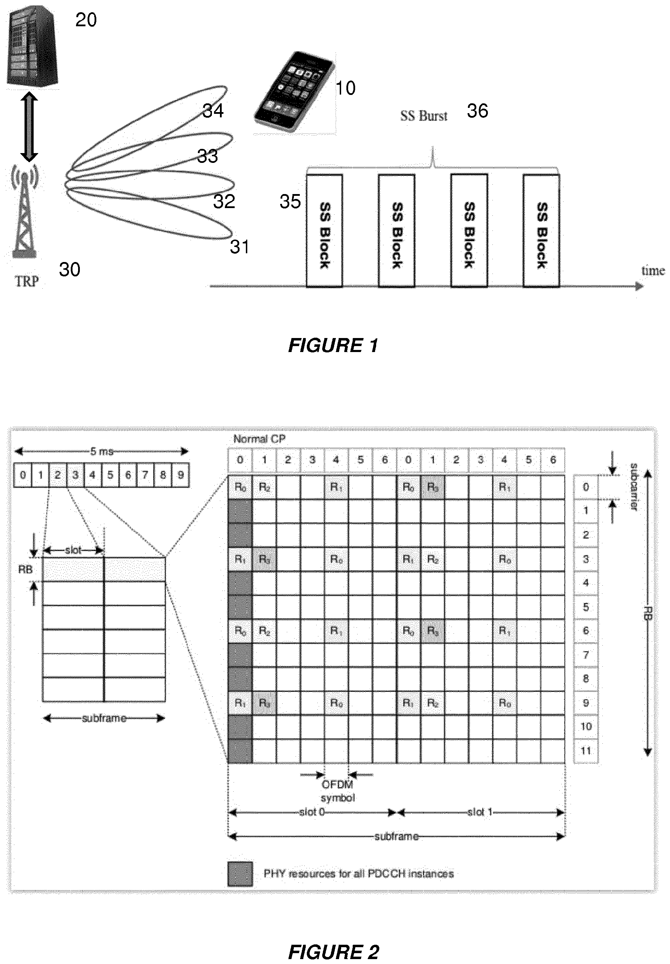

**Figure 1** illustrates a UE 10 arranged for wireless communication with a gNB 20 via a TRP 30. The TRP 30 transmits beams 31 - 34 as indicated by the ellipses. Within each beam, SS blocks 35 (also known as SSBs) are transmitted sequentially in time, each partly occupied by PSS/SSS and PBCH. A plurality of successive SS blocks 35 equal in number to the beams can be grouped together to form one SS burst 36. Multiple SS bursts 36 can compose one "SS burst set" which may be transmitted repeatedly. User data may be multiplexed with the synchronization signals; alternatively, the SS block may contain only PSS/SSS/PBCH, in other words system information.

One key functionality of a mobile communication system is to provide and maintain services to a mobile terminal, which involves handing over the terminal from one node or cell to another. Handover can be either "intra-frequency" or "inter-frequency". Intra-frequency mobility is when a terminal moves between two cells and both cells have the same carrier frequency (though possibly different bandwidths). Inter-frequency mobility applies if there is a change in the carrier frequency. Here, "inter-frequency" refers both to (i) different cells having different carrier frequencies within the same frequency band, and (ii) to different frequency bands usually but not necessarily using the same RAT. With the introduction of carrier aggregation, this concept can extend to different component carriers having different central frequencies within the same frequency band. In LTE both intra-frequency and inter-frequency mobility are supported.

Furthermore, especially with the advent of 5G/NR there is the possibility of inter-RAT handover, where the terminal connects to a cell or node belonging to a different Radio Access Technology such as WiFi for example.

To achieve this functionality RRM (Radio Resource Measurement) is required, the main goal of which is to provide the UE with the capability of timely detection and identification of the most suitable cell(s) available for potential connection. In addition, RRM allows the network to get the information regarding the radio conditions that a particular UE is experiencing. In LTE, measurement activities is controlled by UE both under the RRC_IDLE state and within RRC_CONNECTED state, measurement is configured by the eNB and a terminal will follow the eNB's instructions to perform measurement.

In order to support mobility functionality within the LTE system, a terminal will perform RSRP (Reference Signal Received Power) and RSRQ (Reference Signal Received Quality) measurements, both based on the cell-specific reference signal (CRS). The allocation of CRS in LTE is shown in **Figure 2****,** in which the light-shaded squares marked R indicate locations of reference signals, and darker-shaded squares indicate resources occupied by the Physical Downlink Control Channel PDCCH. Except for shifts at the frequency domain, the CRS pattern of a particular antenna port is identical over the full system bandwidth and repeats itself over the time domain.

When a UE is in RRC_CONNECTED state, exactly when and how to execute measurement is controlled by eNB through measurement configuration. The measurement configuration is sent to the UE by means of dedicated signalling, typically using the "RRCConnectionReconfiguration" message. The measurement configuration message includes the following key components:
**Measurement objects:** The objects on which the UE shall perform the measurements (CRS for example).
**Reporting configurations:** A list of reporting configurations where each reporting configuration consists of the following:
   - Reporting criterion: The criterion that triggers the UE to send a measurement report. This can either be periodical or a single event description.
   - Reporting format: The quantities that the UE includes in the measurement report and associated information (e.g. number of cells to report).
**Measurement identities:** A list of measurement identities where each measurement identity links one measurement object with one reporting configuration. By configuring multiple measurement identities it is possible to link more than one measurement object to the same reporting configuration, as well as to link more than one reporting configuration to the same measurement object. The measurement identity is used as a reference number in the measurement report.
**Measurement gap configuration:** Periods that the UE may use to perform measurements, i.e. no (UL, DL) transmissions are scheduled.

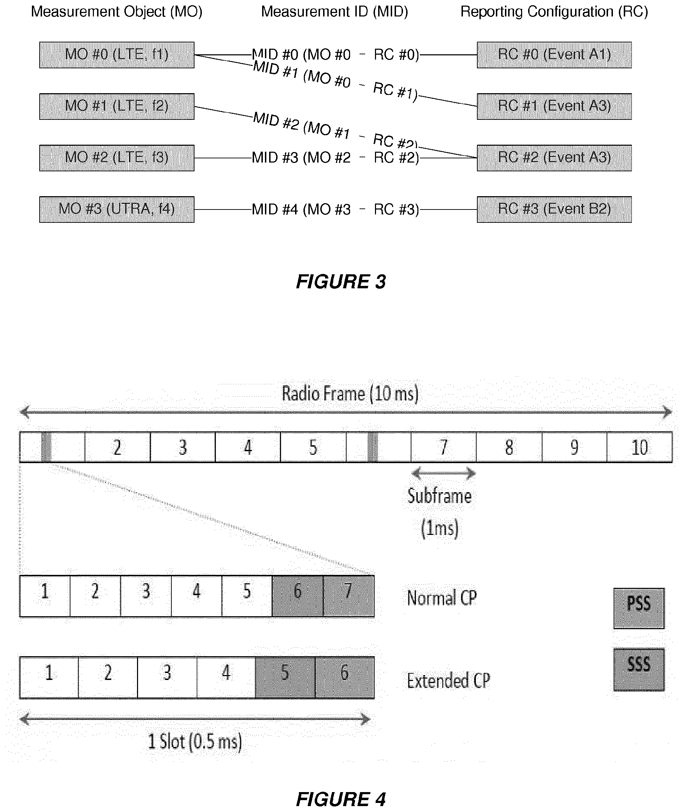

Each measurement identity (MID) is configured to link one measurement object (MO) with one measurement reporting configuration (RC) and is used as a reference number in the measurement report. So by configuring multiple MIDs in LTE, it is possible to link more than one MO to the same RC, as well as to link more than one RC to the same MO, which is illustrated in **Figure 3****.**

A further parameter of relevance to measurement configuration is the measurement duration, in other words the period of time for which to apply the measurement configuration. In LTE, the measurement duration may be implicitly indicated to the UE as the time between successive "RRCConnectionReconfiguration" messages.

In LTE, when a UE performs inter-frequency or inter-RAT measurement, usually a measurement gap will be configured for that UE. The reason for configuring a measurement gap is that a UE will retune its RF chains from the current frequency layer to a different frequency layer to carry out the measurement. Within a measurement gap a UE will not receive any data during downlink (an interruption) and the uplink transmission will also be impacted since the uplink scheduling information cannot be received at the downlink side which means the system capacity and spectrum efficiency is reduced. Thus, within the measurement gap with respect to the serving cell, the UE detects reference signals (CRS) of another cell. However, it is not enough to detect CRS alone: the UE also has to detect synchronization signals on the new frequency layer (cell) and acquire the cell identity.

Therefore, for LTE inter-frequency measurement, a UE will firstly try to detect the synchronization signals (PSS primary synchronization signal and SSS secondary synchronization signal) transmitted by the new frequency layer/cell in order to obtain the location of the reference signals. The synchronization signal of LTE has a periodicity of 5 ms as shown in **Figure 4****.** The measurement gap length is defined to be 6 ms to ensure that one PSS/SSS can always be captured by one particular measurement gap regardless of the offset of the gap, in other words its starting position at the time domain. Although the CRS also need to coincide with the measurement gap as already mentioned, the density of CRS is higher compared with the synchronization signals, so the measurement gap length is less critical with respect to CRS, and the need to detect PSS/SSS is the limiting factor.

Due to new deployment scenarios, a new design philosophy and new 5G technologies especially considering beamforming, the design of NR synchronization signal and reference signals is significantly different as compared with LTE synchronization and reference signal design. To guarantee meaningful and efficient NR RRM measurement, new solutions for the measurement gap configuration have to be provided for NR system.

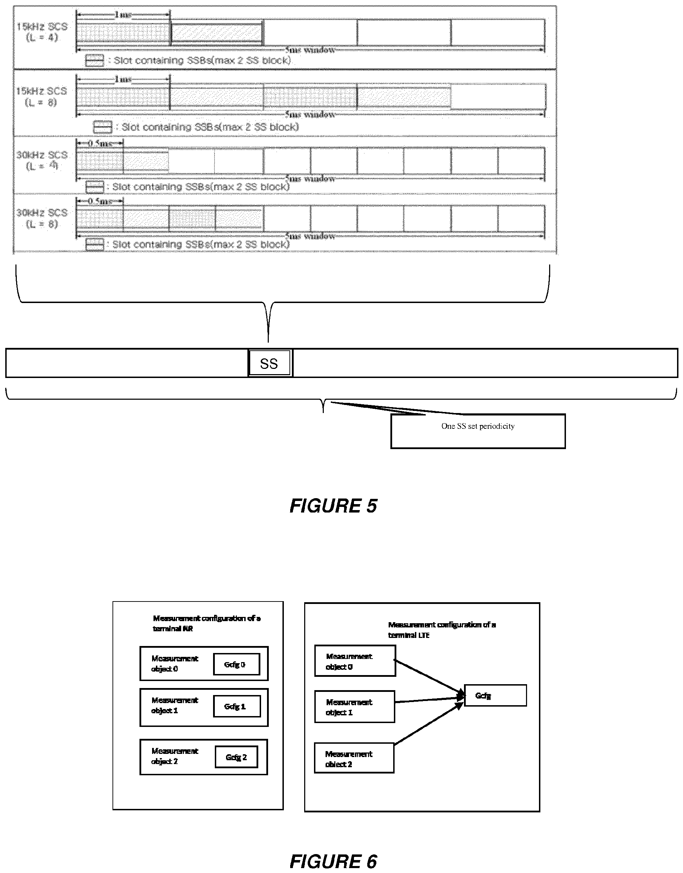

In NR, it is agreed that the transmission of SS blocks within a SS burst set is confined to a 5 ms window regardless of SS burst set periodicity. The value of SS set periodicity is selected from the set of values {5, 10, 20, 40, 80, 160} ms. It is further agreed how to map SS blocks within a 5ms timing window for different subcarrier spacing values, as illustrated in **Figure 5****.**

In the upper part of Figure 5, SSB stands for SS block, and L represents the total number of SS blocks within a SS burst set. Shaded portions represent SS blocks. Also, the solid vertical lines indicate slots, to illustrate how many SS blocks can be located within a 5 ms window. The wording "max 2 SS block" in Figure 5 refers to each shaded area individually: each slot has 14 OFDM symbols (slot duration depends on SCS) and each SS block consists of 4 OFDM symbols. It is agreed that each slot, at maximum, can have 2 SS blocks (which means 8 OFDM symbols where the residual 6 OFDM symbols can be used for other purpose).

The lower part of Figure 5 (solid black lines) shows one SS burst set. Burst set periodicity (within which one SS burst set occurs from a given cell) can be 5, 10, 20, 40, 80 or even possibly 160ms. The periodicity, although not directly linked with SCS, tends to vary with SCS due to mobility performance requirements. Usually a high frequency band will use a larger SCS which means the size of cell is smaller, and corresponding to this the OFDM symbol duration will be shorter. To guarantee mobility performance, synchronization signals will be transmitted more frequently, hence a small burst set periodicity can be used under this scenario.

All SS blocks within a SS burst set are located within the same 5 ms window, for example, a 5 ms window within a 80 ms SS burst set period. Neighbouring cells may be arranged to transmit their SS burst sets within different time windows. Within an individual 5 ms window, the number of SS blocks can range from 4 to 64, depending on SCS. As already mentioned each SS block has 4 OFDM symbols: one is used for PSS, one for SSS and two for PBCH. It is sufficient for the terminal to detect one SS block, though there may be some advantage to detecting more than one, for example to further detect CRS or to measure PSS/SSS power.

In 5G/NR, the total number of OFDM symbols occupied by a SS block is fixed at four, and a slot will have 14 OFDM symbols. Consequently, for different subcarrier spacings, for example comparing 15 kHz and 240 kHz, within a 5 ms time duration, the number of slots of 240 kHz is 16 times compared with that of 15 kHz, since the duration of each OFDM symbol at 240 kHz is 1/16 of that of 15 kHz.

It will be noted that none of the configurations shown in Figure 5 (which are provided purely for purposes of illustration) match the LTE configuration of a 15kHz subcarrier spacing with a 0.5ms slot duration. Incidentally, Figure 5 merely shows mapping within a 5ms window without reference to subframes (which are fixed at 1ms duration for NR).

The text in the shaded box below reflects the way in which a signalling message is represented in the 3GPP standards. In each case, the left-hand column represents parameters in the form of lEs (Information Elements) and the right-hand column indicates possible values of the parameter. In accordance with the style of protocols in TS36.331 (a 3GPP RAN2 specification), INTEGER will return an integer value such as 1, 2, 3. More particularly, specifying the value gp0 or gp1 as follows informs the UE of both the offset and periodicity:-

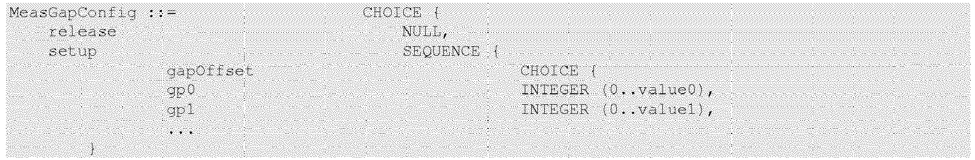

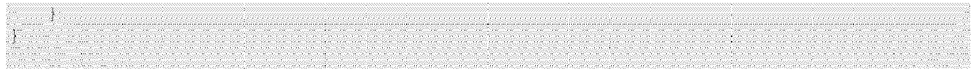

where "gapOffset" means the starting position of the measurement gap and the unit is 1 ms. gp0 ranges from 0 to 39 and gp1 from 0 to 79. Once an offset value is configured, one of the two periods will be selected and used for a terminal until the next update of the measurement configuration.

As mentioned above, the 6ms measurement gap design in LTE is a conservative design to ensure that PSS/SSS is captured by the UE using one measurement gap. The SS periodicity defined in NR brings new challenge on measurement gap length design. If using LTE design methodology, assuming SS set periodicity is 40 ms, then a 40 ms length measurement gap is required to ensure one or a few SS blocks are definitely captured by one measurement gap, no matter its starting position at the time domain. However, a 40 ms measurement gap length is extremely long and not a practical value for use. In practice, even a 10ms interruption at downlink reception may be too long for the mobile communication network design.

In addition, the SS block number of NR is subcarrier spacing dependent and the SS set periodicity may be SCS dependent as well, which further increase the dependency on the system bandwidth and spectrum frequency. There will be a few combinations of SS set periodicity and SS block number which are optimal for the spectrum usage situation, i.e., the choice of how much of the bandwidth is used at which spectrum frequency. The SS set periodicity is limited to one of a set of values like 5, 10, 20, 40 or 80ms, and linked with the SCS and number of SS blocks, as mentioned above with respect to Figure 5. For example using a 240 kHz SCS with 4 SS blocks per 5ms window is a bad combination and should be prevented. Therefore the number of usable combinations is not as many as might be assumed from the ranges of these parameters.

If we further consider the use of CSI-RS for L3 mobility measurements, then unlike the CRS of LTE which has a regular distribution at frequency/time domain, the distribution of CSI-RS is configurable in NR which means that within a particular time/frequency region there may be a lot CSI-RS used by a terminal to make measurements. On the other hand, the CSI-RS could be very sparse within a particular time/frequency region and a terminal is not required to perform measurements during certain times in order to reduce UE power consumption. This can be handled within the measurement configuration, by scheduling a period within which measurements are not made.

For the above reasons there is need to improve the flexibility of measurement gap configuration for 5G/NR.

### Summary of the Invention

According to a first aspect of the present invention, there is provided method of measurement configuration in a wireless communication system, comprising:
providing a terminal with multiple measurement gap configurations for Radio Resource Management, RRM, measurement, each measurement gap configuration including at least a measurement gap length and a periodicity.

Here, the measurement gap length refers to the duration of a measurement gap, within which the terminal is expected to make measurements. The periodicity refers to the repetition period, in other words the interval between successive measurement gaps.

Preferably each measurement gap configuration is linked to a measurement object (a signal to be measured, such as CRS or CSI-RS).

This linking (or mapping of a measurement gap configuration to measurement objects) may be achieved in various ways. In one embodiment each measurement gap configuration is linked to one measurement object respectively. Alternatively, a plurality of the measurement gap configurations may be linked to the same measurement object. The provided measurement gap configurations may replace a measurement configuration information element employed in an LTE wireless communication system.

The terminal may be provided with a default measurement gap configuration, each measurement object optionally having its own measurement gap configuration which replaces the default measurement gap configuration.

In any method as defined above, the terminal may be provided with a measurement gap configuration list which indicates the plurality of measurement gap configurations,
In this case the measurement gap configuration list preferably further comprises a measurement identity list including measurement identities, and the method preferably defines mapping rules between the measurement identities from the measurement identity list and measurement gap configurations from the measurement gap configuration list.

Here, the mapping between measurement identities and measurement gap configurations includes at least one of: one to one mapping, one to multiple mapping and multiple to one mapping.

Where one measurement identity maps to multiple measurement gap configurations, the method may further comprise creating at least one duplicate measurement identity of that one measurement identity, to make the total number of measurement identities the same as the number of measurement gap configurations being mapped to.

In any method as defined above, the measurement gap configurations may apply both to intra/inter-frequency and inter-RAT measurements.

In any method as defined above, each measurement gap configuration preferably further includes an offset value representing a start time of the measurement gap with respect to a timing reference such as a frame timing.

Preferably the providing step is performed by a base station which controls at least one serving cell with which the terminal is in wireless communication.

Therefore, according to a second aspect of the present invention, there is provided a base station for use in a wireless communication system, the base station comprising:
a transmitter/receiver for communicating with a terminal; and
a control unit for causing the transmitter/receiver to communicate to the terminal multiple measurement gap configurations for Radio Resource Management, RRM, measurement, each measurement gap configuration including at least a measurement gap length and a periodicity.

According to a third aspect of the present invention, there is provided a terminal for use in a wireless communication system, the terminal comprising:
a transmitter/receiver which may be controlled to make measurements on signals; and
a control unit for controlling the transmitter/receiver to make measurements using one of a plurality of measurement gap configurations with which the terminal has been configured, each measurement gap configuration including at least a measurement gap length and a periodicity.

According to a fourth aspect of the present invention, there is provided a wireless communication system comprising the base station as defined above and the terminal as defined above.

In any method as outlined above, the wireless communication system may operate either with multiple beams or a single beam.

The above base station, terminal and wireless communication system may include any of the features of the method outlined above.

Further aspects of the present invention provide computer-readable code which configures a station in a wireless communication system to perform any method as defined above, as well as a non-transitory computer-readable recording media carrying such code.

Features in embodiments include the following:
- A method which is designed for the measurement gap configuration in a communication system with multi-beam/single-beam operation, comprising enabling each terminal to have multiple measurement gap configurations for RRM measurement which including intra/inter-frequency and inter-RAT measurements.
   - Enabling each measurement object to have one or multiple measurement gap configurations. When each measurement object has one measurement gap configuration, these measurement gap configuration may be different.
   - Each measurement object may have its own optional measurement gap configuration and define a default measurement gap configuration within measurement configuration signalling.
- Setting up and maintaining a measurement gap configuration list within the measurement configuration signalling
   - Defining mapping rules between one measurement identity from the measurement identity list and one measurement gap configuration from the measurement gap list. The mapping between measurement identities and measurement gap configurations could be one to one mapping, one to multiple mapping and multiple to one mapping.
   - When one particular measurement identity maps to multiple measurement gap configurations, creating more measurement identities through duplicating that measurement identity to make the number of duplicated measurement identities including the original one the same as the number of measurement gap configurations being mapped to.

In general, and unless there is a clear intention to the contrary, features described with respect to one aspect of the invention may be applied equally and in any combination to any other aspect, even if such a combination is not explicitly mentioned or described herein.

The "terminal" referred to above will typically take the form of a user equipment (UE), subscriber station (SS), or a mobile station (MS), or any other suitable fixed-position or movable form. For the purpose of visualising the invention, it may be convenient to imagine the terminal as a mobile handset (and in many instances at least some of the terminals will comprise mobile handsets), however no limitation is to be implied from this. The terminal may also function as a mobile relay station for example.

### Brief Description of the Drawings

Reference is made, by way of example only, to the accompanying drawings in which:
Figure 1 illustrates a wireless communication system including a UE, gNB and TRP and showing SS bursts within a transmission beam;
Figure 2 illustrates a pattern of cell-specific reference signals, CRS, employed in a known LTE wireless communication system;
Figure 3 illustrates the relationship between a measurement object, measurement identity and reporting configuration;
Figure 4 illustrates the periodicity of synchronization signals;
Figure 5 shows proposed mappings of SS blocks within a 5ms timing window as proposed for 5G/NR;
Figure 6 illustrates an embodiment of the present invention in which measurement gap configuration is measurement object-dependent;
Figure 7 shows mapping between measurement identities and measurement gap configurations in another embodiment of the present invention;
Figure 8 is a schematic block diagram of a terminal to which the present invention may be applied; and
Figure 9 is a schematic block diagram of a base station to which the present invention may be applied.

### Detailed Description

Considering all factors mentioned in the introduction, the inventors realized that it would be desirable in 5G/NR to allow the possibility of different measurement objects having different measurement gap configurations. However the current measurement configuration signalling structure does allow this type of operation. As shown below, the measurement configuration signalling "MeasConfig" has a list of measurement objects and has only one measurement gap configuration which means that identical measurement gap configurations will apply for all measurement objects. Incidentally, all the types of information listed below and contained in "MeasConfig", are referred to below as measurement configuration information; also, "measGapConfig" below is the same as the "MeasGapConfig" referred to earlier; in other words, "MeasConfig" contains "MeasGapConfig" as one part.

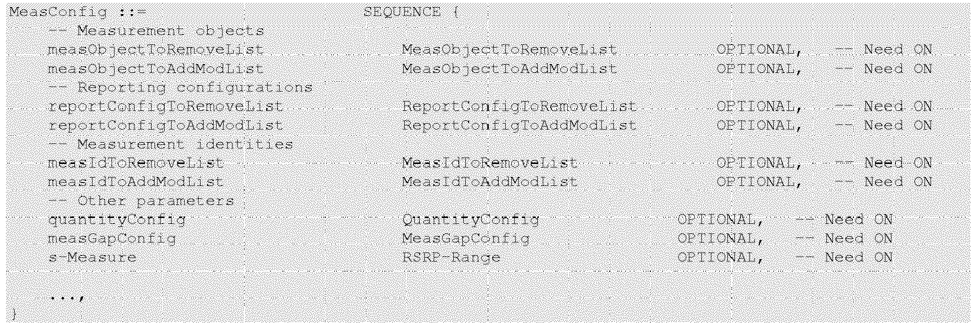

The invention will now be described with reference to embodiments based on a 5G/NR which is assumed to share many characteristics with LTE. It is assumed that the 5G/NR system includes a serving cell in wireless communication with a UE, the serving cell provided by or at least controlled by a base station (gNB).

The texts in shaded boxes below are signalling examples, reflecting the way in which signalling messages are represented in the 3GPP standards. Text in bold indicates new additions in embodiments of the present invention, the remaining text being items already present conventionally or agreed for use in 5G/NR.

The items in the measurement gap configuration information including gap length, gap repetition period or both, may be referred to as the "measurement gap configuration". Based on the discussion in the introduction, a first embodiment is to make the measurement gap configuration dependent on the measurement object, instead of dependent on the measurement configuration information ("MeasConfig") or terminal-dependent.

The second embodiment, depending on the first embodiment, is to allow each measurement object to have its own measurement gap configuration and remove the measurement configuration IE from the measurement configuration information. Each measurement object may have one or multiple measurement gap configurations. One example is shown in **Figure 6** where the left side shows one example of this embodiment and the LTE configuration is shown at the right hand side. "Gcfg" in the Figure means gap configuration.

In LTE, the measurement configuration for a UE maintains a list of measurement objects. Each measurement object has its own signalling structure, included in the above mentioned "MeasConfig". For example the structure of LTE measurement object is copied below for illustration purposes (only part of whole signalling is copied):

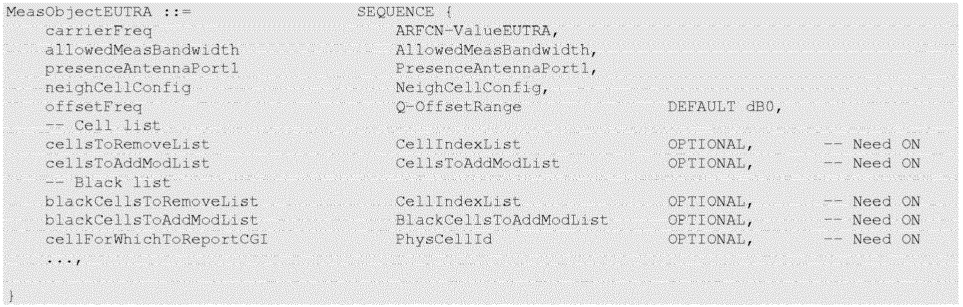

Incidentally, the words "Need ON" refer to optional lEs of the measurement object. If such an IE is not received from a base station, the terminal uses a previously-configured value of this IE.

One possible implementation is to employ the same basic signalling structure (MeasConfig) as in LTE, but to insert the measurement gap configuration into the measurement object signalling structure as a new Information Element "MeasObjectNR" to replace the "MeasObjectEUTRA" of LTE:

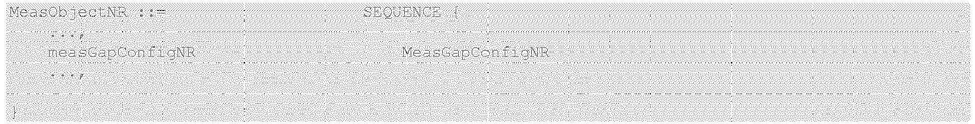

In this way, the novel "MeasObjectNR" will provide the same function in NR as "MeasObjectEUTRA" provides in LTE.

There may be one or multiple "measGapConfigNR" for each measurement object. If one measurement object may have multiple measurement gap configurations, the measurement gap configuration signalling may be designed as below:

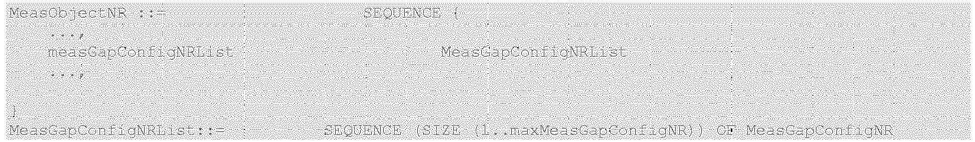

For each measurement object, the maximum number of "MeasGapConfigNR" which may be configured is up to maxMeasGapConfigNR.

The third embodiment, depending on the first embodiment, is to setup a default measurement gap configuration within the measurement configuration signalling. Each measurement object may have its own optional measurement gap configuration. One example implementation signalling is shown below:

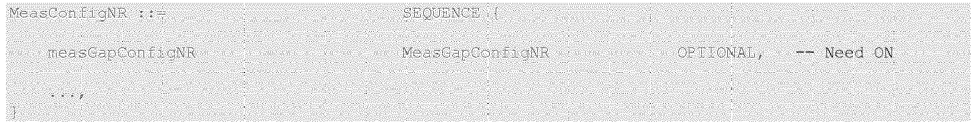

The above new IE "measGapConfigNR" may be inserted at a desired location within "MeasConfigNR", the precise location being unimportant. Note that the above signalling does not distinguish between different measurement objects: rather, it sets up a default measurement gap configuration for all measurement objects, as is done in LTE. If there is a further measurement map configuration for a particular measurement object, then that measurement object will use the new one and the default one will be overwritten.

Similarly to the second embodiment, there are two ways to define measurement gap configurations within a measurement object. Example signalling designs for these two ways are illustrated as below:

### Option 1:

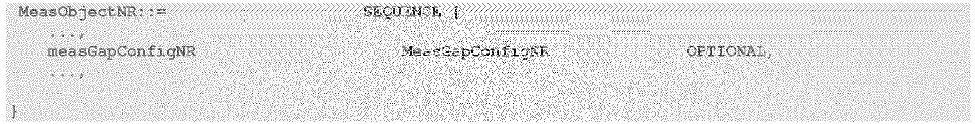

### Option 2:

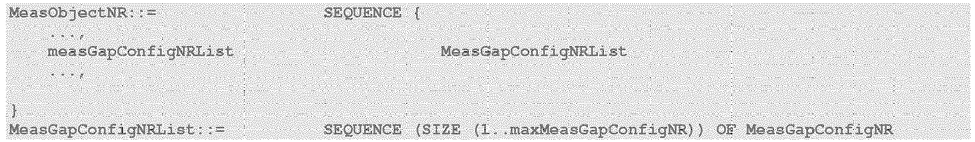

It should be noted that in both Options all the above text is bold, i.e. novel in this embodiment.

Thus, the difference between the second and third embodiments is that in the third embodiment, "MeasConfigNR" provides a default measurement gap configuration. Although in both embodiments the structure of "MeasObjectNR" is the same, "MeasObjectNR" must be configured for every measurement object in the second embodiment, whereas in the third embodiment "MeasObjectNR" does not need to be configured for every measurement object. Measurement objects without a measurement gap configuration will use the default one provided by "MeasConfigNR".

The fourth embodiment, which is an independent embodiment, is to set up and maintain a measurement gap configuration list within the measurement configuration signalling. The difference compared with the second or third embodiment is that the target is different. "measGapConfigNRList" in the second and third embodiments provides a list of measurement gap configurations for one measurement object, i.e., it is measurement object dependent. By contrast, in the fourth embodiment the measurement gap configuration becomes measurement ID dependent. Modification of the measurement gap configuration list in the fourth embodiment will not impact the measurement object list. In LTE, the number of a measurement ID depends on the mapping between measurement objects and reporting configurations (as shown in Figure 3), and here it is assumed that the NR measurement ID will follow the same rules as the LTE measurement ID.

One example of the measurement configuration signalling in the fourth embodiment is shown below, where the newly-added wording (in bold) adds a list of measurement gap configurations and the possibility to modify the list by removing or adding measurement gaps:

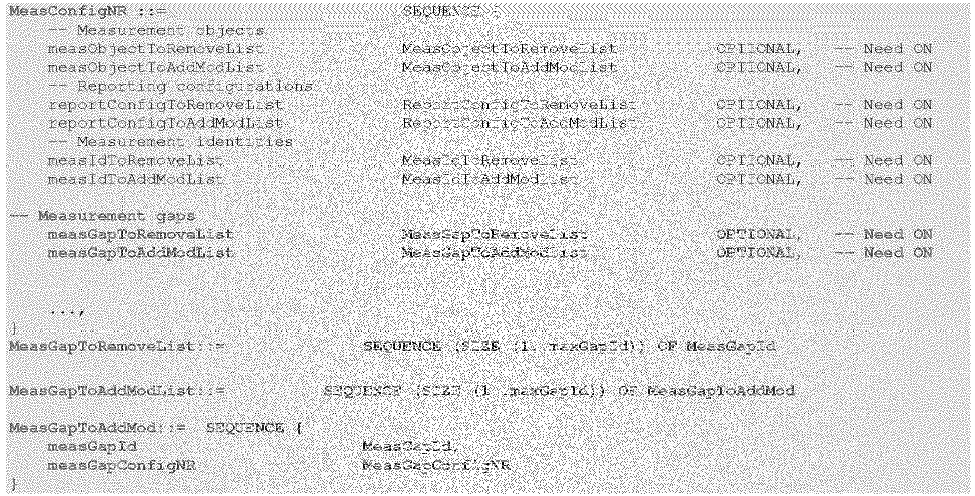

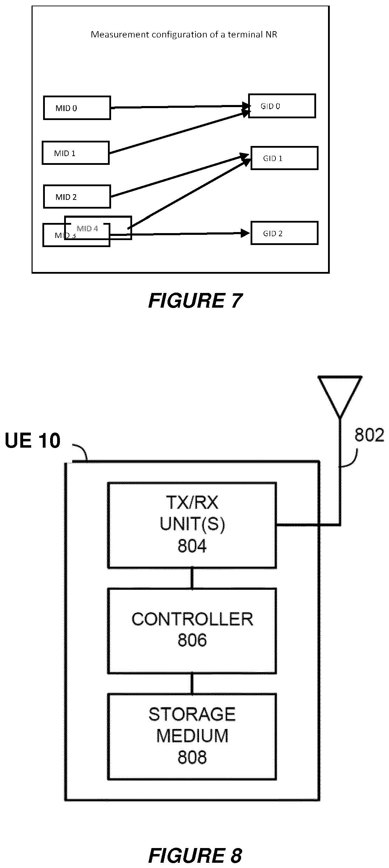

The fifth embodiment, dependent on the fourth embodiment, is to setup the mapping between one measurement identity from the measurement identity list and one measurement gap configuration from the measurement gap list. The mapping between measurement identities and measurement gap configurations could be one to one mapping, one to multiple mapping and multiple to one mapping, as shown in **Figure 7****.**

The sixth embodiment, dependent on the fifth embodiment, is to use detailed mapping rules between one measurement identity and one measurement gap configuration. As shown in Figure 7, when multiple measurement identities map to the same measurement gap configuration, or one particular measurement identity maps to one particular measurement gap configuration, there is no modification to any measurement identity. However, when one particular measurement identity maps to multiple measurement gap configurations, more measurement identities will be generated to make the number of measurement identities the same as the number of mappings to those measurement gap configurations. The content of these new generated measurement identities is duplicated from the original measurement identity. For example the content of MID 4 in Figure 7 is the same as that of MID 3 where the only difference is that they map to different measurement gap configurations.

**Figure 8** is a block diagram illustrating an example of a terminal (UE) 10 to which the present invention may be applied. The terminal 10 may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The terminal 10 includes transmitter/receiver unit(s) 804 connected to at least one antenna 802 (together defining a communication unit) and a controller 806 having access to memory in the form of a storage medium 808. The controller 806 may be, for example, a microprocessor, digital signal processor (DSP), application-specific integrated circuit (ASIC), field-programmable gate array (FPGA), or other logic circuitry programmed or otherwise configured to perform the various functions described above, including obtaining the measurement configuration from the received signals and control the transmitter/receiver unit 804 accordingly. For example, the various functions described above may be embodied in the form of a computer program stored in the storage medium 808 and executed by the controller 806. The transmission/reception unit 804 is arranged, under control of the controller 806, to receive SS blocks, detect reference signals, and so on as discussed previously. The storage medium 808 stores the received measurement configuration, results of measurements on reference signals and so on.

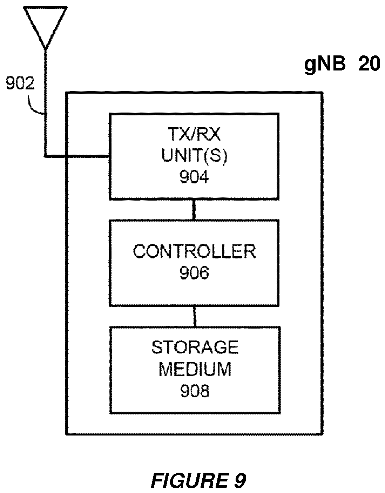

**Figure 9** is a block diagram illustrating an example of a base station (gNB) 20 responsible for one or more cells. The base station includes transmitter/receiver unit(s) 904 connected to at least one antenna 902 (which forms a TRP either built into, or external to, the gNB) and a controller 906. The controller 906 may be, for example, a microprocessor, DSP, ASIC, FPGA, or other logic circuitry programmed or otherwise configured to perform the various functions described above, in particular operating the transmitter/receiver unit 904 to transmit a measurement configuration to the terminal, the measurement configuration embodying one or more embodiments of the present invention. For example, the various functions described above may be embodied in the form of a computer program stored in the storage medium 908 and executed by the controller 906. The transmission/reception unit 904 is responsible for broadcasting synchronization signals, reference signals, RRC messages and so forth, under control of the controller 906.

Thus, to summarise, embodiments of the present invention provide a method and apparatus by which a gNB may provide a terminal with multiple measurement gap configurations, each measurement gap configuration including at least a measurement gap length and periodicity. Each measurement gap configuration may be linked to a measurement object (with possibly multiple measurement gap configurations defined for one and the same measurement object). The provided measurement gap configurations may replace a measurement configuration information element employed in an LTE wireless communication system (in which case there is no default configuration); alternatively the terminal has a default measurement gap configuration, each measurement object optionally having its own measurement gap configuration which replaces the default configuration. The terminal may be provided with a measurement gap configuration list which indicates the plurality of measurement gap configurations, and a measurement identity list including measurement identities with mappings between the two. In this way, a more flexible measurement configuration may be provided suitable for NR.

Various modifications are possible within the scope of the present invention.

Whilst primarily intended for multi-beam systems, embodiments of the present invention may also be employed even with only a single beam.

As already mentioned, embodiments of the present invention involve synchronization signals broadcast or transmitted by a cell in order to enable terminals to become synchronized. A known example of such signals from LTE is the above mentioned PSS/SSS. However, the present invention is not necessarily limited to PSS/SSS as these terms are understood in the context of LTE. Other types of signal employed in a LTE and 5G systems, which a UE may need to detect within a measurement gap, might also be applicable to the present invention.

The invention is equally applicable to FDD and TDD systems, and to mixed TDD/FDD implementations (i.e., not restricted to cells of the same FDD/TDD type).

In any of the aspects or embodiments of the invention described above, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein.

A computer program embodying the invention may be stored on a computer-readable medium, or it may, for example, be in the form of a signal such as a downloadable data signal provided from an Internet website, or it may be in any other form.

It is to be clearly understood that various changes and/or modifications may be made to the particular embodiment just described without departing from the scope of the claims.

### Industrial Applicability

In LTE, a terminal will only have one measurement gap configuration which is linked to all measurement objects. By contrast, embodiments of the present invention enable each measurement object to have its own measurement gap configuration. This additional flexibility of configuration is more suitable for 5G/NR, allowing increased spectral efficiency for measurements as well as lower UE power consumption. This is also needed for the intra-frequency case for ensuring that the UE is able to detect all possible beams of neighbour cells. In addition it also provides a solution where a terminal may be provided with a measurement gap configuration list which indicates the plurality of measurement gap configurations, and a measurement identity list including measurement identities with mappings between the two.

## Claims

1. A method of measurement configuration in a wireless communication system, comprising:
providing a terminal with multiple measurement gap configurations for Radio Resource Management, RRM, measurement, each measurement gap configuration including at least a measurement gap length and a periodicity.

2. The method according to claim 1 wherein each measurement gap configuration is linked to a measurement object.

3. The method according to claim 2 wherein each measurement gap configuration is linked to one measurement object respectively.

4. The method according to claim 2 wherein a plurality of the measurement gap configurations are linked to the same measurement object.

5. The method according to any of claims 2 to 4 further comprising providing the terminal with a default measurement gap configuration, each measurement object optionally having its own measurement gap configuration which replaces the default measurement gap configuration.

6. The method according to any preceding claim further comprising providing the terminal with a measurement gap configuration list which indicates the plurality of measurement gap configurations,

7. The method according to claim 6 wherein the measurement gap configuration list further comprises a measurement identity list including measurement identities, the method further comprising defining mapping rules between the measurement identities from the measurement identity list and measurement gap configurations from the measurement gap configuration list.

8. The method according to claim 7 wherein the mapping between measurement identities and measurement gap configurations includes at least one of: one to one mapping, one to multiple mapping and multiple to one mapping.

9. The method according to claim 8 further comprising, when a said measurement identity maps to multiple measurement gap configurations, creating at least one duplicate measurement identity of the said measurement identity to make the total number of measurement identities the same as the number of measurement gap configurations being mapped to.

10. The method according to any preceding claim wherein the measurement gap configurations apply both to intra/inter-frequency and inter-RAT measurements.

11. The method according to any preceding claim wherein each measurement gap configuration further includes an offset value representing a start time of the measurement gap with respect to a timing reference.

12. The method according to any preceding claim wherein the method is performed by a base station which controls at least one serving cell with which the terminal is in wireless communication.

13. A base station for use in a wireless communication system, the base station comprising:
a transmitter/receiver for communicating with a terminal; and
a control unit for causing the transmitter/receiver to communicate to the terminal multiple measurement gap configurations for Radio Resource Management, RRM, measurement, each measurement gap configuration including at least a measurement gap length and a periodicity.

14. A terminal for use in a wireless communication system, the terminal comprising:
a transmitter/receiver which may be controlled to make measurements on signals; and
a control unit for controlling the transmitter/receiver to make measurements using one of a plurality of measurement gap configurations with which the terminal has been configured, each measurement gap configuration including at least a measurement gap length and a periodicity.

15. A wireless communication system comprising the base station according to claim 13 and the terminal according to claim 14.

## Amended claims

### Amended claims in accordance with Rule 137(2) EPC.

1. A method of measurement configuration in a wireless communication system, comprising:
at a base station which controls at least one serving cell with which a terminal is in wireless communication, providing terminal with multiple measurement gap configurations for Radio Resource Management, RRM, measurement, each measurement gap configuration including at least a measurement gap length and a periodicity, wherein each measurement gap configuration is linked to one of a plurality of measurement objects, and.
further comprising providing the terminal with a default measurement gap configuration for measurement objects not belonging to the plurality of measurement objects linked to one of the measurement gap configurations.

2. The method according to claim 1 wherein a plurality of the measurement gap configurations are linked to the same measurement object.

3. The method according to any preceding claim further comprising providing the terminal with a measurement gap configuration list which indicates the plurality of measurement gap configurations,

4. The method according to claim 3 wherein the measurement gap configuration list further comprises a measurement identity list including measurement identities, the method further comprising defining mapping rules between the measurement identities from the measurement identity list and measurement gap configurations from the measurement gap configuration list.

5. The method according to claim 4 wherein the mapping between measurement identities and measurement gap configurations includes at least one of: one to one mapping, one to multiple mapping and multiple to one mapping.

6. The method according to claim 5 further comprising, when a said measurement identity maps to multiple measurement gap configurations, creating at least one duplicate measurement identity of the said measurement identity to make the total number of measurement identities the same as the number of measurement gap configurations being mapped to.

7. The method according to any preceding claim wherein the measurement gap configurations apply both to intra/inter-frequency and inter-RAT measurements.

8. The method according to any preceding claim wherein each measurement gap configuration further includes an offset value representing a start time of the measurement gap with respect to a timing reference.

9. A base station for use in a wireless communication system, the base station controlling at least one serving cell with which a terminal is in wireless communication, the base station comprising:
a transmitter/receiver for communicating with the terminal; and
a control unit for causing the transmitter/receiver to communicate to the terminal:
multiple measurement gap configurations for Radio Resource Management, RRM, measurement, each measurement gap configuration including at least a measurement gap length and a periodicity, wherein each measurement gap configuration is linked to one of a plurality of measurement objects; and
a default measurement gap configuration for measurement objects not belonging to the plurality of measurement objects linked to one of the measurement gap configurations.

10. A terminal for use in a wireless communication system, the terminal in wireless communication with a serving cell of a base station, the terminal comprising:
a transmitter/receiver controllable to make measurements on signals; and
a control unit for controlling the transmitter/receiver to make measurements using one of:
a plurality of measurement gap configurations with which the terminal has been configured, each measurement gap configuration including at least a measurement gap length and a periodicity, wherein each measurement gap configuration is linked to one of a plurality of measurement objects; and
a default measurement gap configuration for measurement objects not belonging to the plurality of measurement objects linked to one of the measurement gap configurations.

11. A wireless communication system comprising the base station according to claim 9 and the terminal according to claim 10.
